# DEMANDE DE BREVET EUROPEEN

(11) **EP 2 620 337 A2**
(43) Date de publication de la demande: **31.07.2013**
(21) Numéro de dépôt: 13000400.5
(22) Date de dépôt: 13.12.2006
(51) Int. Cl.: B60T 13/26, B60T 17/18

(54) **Dispositif de freinage notamment pour un véhicule industriel**

(62) Demande divisionnaire de: 06841928.2
(71) Demandeur: Renault Trucks, 69806 Saint Priest (FR)
(72) Inventeur: Rollin, Christian, 38460 ST Romain DE Jalionas (FR)
(74) Mandataire: Faucheux, Jérôme

(57) **Abrégé**

Ce dispositif de freinage (1) notamment pour un véhicule industriel, comprend un circuit pneumatique de freinage avant (6) susceptible d'agir sur un ou plusieurs premiers essieux avant du véhicule et fonctionnant sous une pression pneumatique nominale de fonctionnement et un circuit pneumatique de freinage arrière (7) susceptible d'agir sur un ou plusieurs essieux arrière du véhicule et fonctionnant sous une pression nominale de fonctionnement ; en outre, le dispositif de freinage comprend des moyens de connexion - qui peuvent être, de préférence, une double valve d'arrêt (24) - du circuit pneumatique de freinage arrière (7) avec le circuit pneumatique de freinage avant (6) interdisant le passage pneumatique circuit de freinage arrière (7) vers le circuit de freinage avant (6) lorsque le circuit de freinage avant fonctionne à sa pression nominale de fonctionnement et autorisant le passage pneumatique du circuit de freinage arrière (7) vers le circuit de freinage avant (6) lorsque le circuit de freinage avant (6) fonctionne à une pression inférieure à sa pression nominale de fonctionnement.

## Description

### Domaine technique de l'invention

La présente invention concerne un dispositif de freinage pour un véhicule industriel, notamment pour un véhicule industriel à multiples essieux avant et arrière.

### Arrière plan technologique

De façon classique, les véhicules industriels et, notamment, les camions (par camion, on entend de manière générale tout véhicule motorisé destiné à porter ou tracter une charge) sont équipés d'un système de freinage fonctionnant grâce à un fluide sous pression qui peut être hydraulique mais qui est le plus souvent pneumatique.

Par mesure de sécurité, tout véhicule industriel possède deux circuits de freinage. Un circuit de freinage peut commander les freins du ou des essieux avant tandis que le second circuit de freinage peut commander les freins du ou des essieux arrière. Chaque circuit de freinage comporte son propre réservoir d'air comprimé et ainsi, en cas de défaillance de l'un des circuits, il reste possible de freiner le véhicule grâce au circuit de freinage intact.

Lors de l'homologation d'un véhicule industriel, il peut être pratiqué un test de freinage au cours duquel le circuit de freinage avant est neutralisé pour simuler une panne. Pour recevoir un certificat d'homologation, le camion doit néanmoins pouvoir conserver une certaine capacité de décélération et, pour cela, il est nécessaire qu'une capacité de freinage soit rétablie sur l'essieu avant du véhicule. Le seul circuit de freinage arrière s'avère généralement insuffisant pour freiner le véhicule.

Le rétablissement d'une capacité de freinage sur le circuit de freinage avant peut se faire selon un dispositif tel que celui montré dans le document WO2006/067283.

Toutefois, dans le cas d'un véhicule multi essieux et notamment possédant plusieurs essieux avant, un dispositif tel que celui montré dans le document WO2006/06283 peut s'avérer inadapté. Pour, par exemple, des véhicules de chantiers, les essieux avant sont généralement au nombre de deux, mais dans le cas de véhicules spéciaux ou de véhicules militaires, le nombre d'essieux avant peut dépasser deux. Ces essieux avant, qui peuvent également être directeurs, sont chacun équipé d'au moins deux actionneurs de freinage pneumatiques qui agissent respectivement sur chacune des deux roues d'un essieu. L'actionneur de freinage est l'organe qui convertit un signal fluidique - généralement pneumatique sur des véhicules industriels - en une action mécanique sur un moyen de freinage lié à une roue, à savoir un disque ou un tambour.

On conçoit que si le circuit de freinage avant est désactivé, soit dans le cadre d'un test d'homologation soit à la suite d'une avarie au cours de la marche du véhicule, il faut alors réalimenter une importante puissance pneumatique si l'on veut rétablir une capacité de freinage suffisante pour arrêter le véhicule. Il faut, en effet, prendre en compte la capacité des multiples actionneurs pneumatiques.

Il apparaît donc que la gestion du fonctionnement du freinage d'un véhicule multi essieux dans un mode défaillant présente des spécificités qui ne sont pas actuellement prises en compte de manière satisfaisante.

### Résumé de l'invention

Un but de l'invention est de proposer un dispositif de freinage pour un véhicule industriel ayant un ou plusieurs essieux avant et un ou plusieurs essieux arrière, une fonction de secours permettant de rétablir une certaine capacité de freinage à un circuit de freinage défaillant.

Un autre but de l'invention est de proposer un dispositif de freinage ayant une fonction de secours dont le fonctionnement soit fiable.

Un autre but de l'invention est de proposer un dispositif de freinage ayant une fonction de secours dont le surcoût reste mesuré.

L'invention a essentiellement pour objet un dispositif de freinage notamment pour un véhicule industriel, comprenant un premier circuit pneumatique de freinage susceptible d'agir sur un ou plusieurs premiers actionneurs de freinage du véhicule et fonctionnant sous une pression pneumatique nominale de fonctionnement et un second circuit pneumatique de freinage susceptible d'agir sur un ou plusieurs seconds actionneurs de freinage du véhicule et fonctionnant sous une pression nominale de fonctionnement; en outre, le dispositif de freinage comprend des moyens de connexion du second circuit pneumatique de freinage avec le premier circuit pneumatique de freinage interdisant le passage pneumatique du second circuit vers le premier circuit lorsque le premier circuit de freinage fonctionne à sa pression nominale de fonctionnement et autorisant le passage pneumatique du second circuit de freinage vers le premier circuit de freinage lorsque le premier circuit de freinage fonctionne à une pression inférieure à sa pression nominale de fonctionnement.

L'invention propose ainsi d'assurer une connexion permanente entre le premier circuit de freinage et le second circuit de freinage et d'utiliser la pression pneumatique du second circuit de freinage pour alimenter le premier circuit de freinage en cas de défaillance pneumatique de ce dernier, c'est-à-dire en cas de chute de pression pneumatique dans ce circuit. Ainsi, l'invention permet de rétablir une capacité de freinage significative, car provenant d'un autre circuit de freinage, sur le ou les premiers actionneurs de freinage qui, du fait de la défaillance du premier circuit de freinage, seraient sinon sans ressource pneumatique de freinage.

Selon une forme de réalisation avantageuse, le dispositif de freinage comprend une vanne d'aiguillage reliant le second circuit de freinage au premier circuit de freinage ; ladite vanne d'aiguillage présente une première entrée reliée au premier circuit de freinage, une seconde entrée reliée au second circuit de freinage, et une sortie reliée à un premier module de commande du premier circuit de freinage.

La liaison entre le premier circuit de freinage et le second circuit de freinage est mise à profit lors d'une défaillance pneumatique du premier circuit de freinage qui induit une chute totale ou partielle de la pression pneumatique dans le premier circuit de freinage ; cette chute de pression dans le premier circuit de freinage se traduit par un basculement de la vanne d'aiguillage qui autorise la pression pneumatique du second circuit de freinage à alimenter le premier module de freinage EBS.

Selon une possibilité, la vanne d'aiguillage peut être un distributeur 3/2 à trois orifices et deux positions présentant une première entrée reliée au premier circuit de freinage, une seconde entrée reliée au second circuit de freinage et une sortie reliée au premier module de commande et un tiroir qui en position de repos obture la seconde entrée.

De préférence, le distributeur peut être à commande pneumatique qui, lorsque la pression à la première entrée est supérieure à une pression de seuil, met en communication ladite première entrée avec la sortie, et qui, lorsque la pression à la première entrée est inférieure à une pression de seuil, met en communication la seconde entrée avec la sortie.

Selon une autre possibilité, la vanne d'aiguillage peut être une double valve d'arrêt ayant une première entrée relié au premier circuit de freinage, une seconde entrée reliée au second circuit de freinage, une sortie reliée audit premier module de commande et un clapet qui circule entre la première entrée et le seconde entrée de sorte à diriger l'air depuis l'une des première et seconde entrées et soumise à la pression la plus élevée vers la sortie; le dispositif peut comprendre, en outre, en série de la vanne d'aiguillage, des moyens de décalage de la mise en pression sur les deux entrées de la double valve d'arrêt en faveur de la première entrée reliée au premier circuit de freinage.

L'insertion d'une double valve d'arrêt entre le premier circuit de freinage et le second circuit de freinage permet de connecter ces deux circuits par un organe standard, peu coûteux et d'un fonctionnement fiable. Associée aux moyens assurant un décalage de la pression pneumatique appliquée (i) à la première entrée de la double valve d'arrêt connectée au premier circuit de freinage et (ii) à la seconde entrée de la double valve d'arrêt connectée au second circuit de freinage, la double valve d'arrêt permet d'assurer en permanence une liaison pneumatique entre le premier circuit de freinage et le second circuit de freinage.

Selon une disposition avantageuse, le dispositif de freinage selon l'invention comprend, en outre, une valve de barrage placée en amont de la vanne d'aiguillage et présentant une entrée reliée au second circuit de freinage et une sortie reliée à la deuxième entrée de la vanne d'aiguillage, la valve de barrage étant passante entre son entrée et sa sortie lorsque la pression pneumatique dans le second circuit de freinage dépasse une pression prédéterminée égale à la pression de barrage.

De façon pratique, la fonction de décalage de la pression pneumatique appliquée (i) à l'entrée de la double valve d'arrêt connectée au premier circuit de freinage et (ii) à l'entrée de la double valve d'arrêt connectée au second circuit de freinage peut être assurée pour une valve de barrage qui, comme la double valve d'arrêt, est un organe standard, peu coûteux et d'un fonctionnement faible.

Concrètement, il est envisagé que le premier circuit de freinage soit un circuit de freinage avant d'un véhicule et le second circuit de freinage soit un circuit de freinage arrière de ce véhicule. En effet, une défaillance du circuit de freinage avant s'avère plus critique qu'une défaillance du circuit de freinage arrière. Dans le cas d'un véhicule industriel, la masse du véhicule est très inégalement répartie et se trouve majoritairement concentrée sur la partie avant du véhicule. Lorsqu'un tel véhicule est à vide, il y a un risque important de délestage du ou des trains arrière si bien qu'un freinage qui ne s'appliquerait que sur le ou les trains arrière pourrait être sans efficacité.

De préférence, la vanne d'aiguillage et la valve de barrage sont directement fixées sur le premier module de commande. Cette disposition permet d'écarter d'éventuelles avaries qui pourraient être causées par d'éventuels éléments interposés entre la double valve d'arrêt ou la valve de barrage et le module de commande.

Il peut être envisagé que le premier module de commande soit un module de commande électronisé.

En pratique, le premier module de commande peut être piloté électriquement. De préférence, le premier module de commande peut comporter, de plus, un pilotage redondant par voie pneumatique et est connu sous le nom de module électronique de freinage EBS.

Selon un autre aspect de l'invention, le dispositif de freinage comprend un premier circuit de pilotage pneumatique susceptible d'agir sur le premier module de commande et un second circuit de pilotage pneumatique susceptible d'agir sur un second module de commande du second circuit de freinage, le dispositif de freinage comprenant des moyens de connexion du second circuit pneumatique de pilotage avec le premier circuit pneumatique de pilotage interdisant le passage pneumatique du second circuit de pilotage vers le premier circuit de pilotage lorsque le premier de pilotage circuit fonctionne sous sa pression nominale de fonctionnement et autorisant le passage pneumatique du second circuit vers le premier circuit de pilotage lorsque le premier circuit de pilotage fonctionne sous une pression inférieure à sa pression nominale de fonctionnement.

De manière concrète, le dispositif peut comprendre une vanne d'aiguillage reliant le second circuit de pilotage pneumatique au premier circuit de pilotage pneumatique, ladite vanne présentant une seconde entrée reliée au second circuit de pilotage, une première entrée reliée au premier circuit de pilotage, et une sortie reliée au premier module de commande.

Selon une possibilité, la vanne d'aiguillage est une double valve d'arrêt ayant une première entrée relié au premier circuit de pilotage pneumatique, une seconde entrée reliée au second circuit de pilotage pneumatique, une sortie reliée audit à un orifice pilotage de premier module de commande et un clapet qui circule entre la première entrée et le seconde entrée de sorte à diriger l'air depuis l'une des entrées et soumise à la pression la plus élevée vers la sortie.

Selon une autre possibilité, la vanne d'aiguillage peut être un distributeur 3/2 à trois orifices et deux positions. présentant une première entrée reliée au premier circuit pneumatique de pilotage, une seconde entrée reliée au second circuit pneumatique de pilotage et une sortie reliée à un orifice de pilotage du premier module de commande et un tiroir qui en position de repos obture la seconde entrée.

Dans une forme de réalisation qui peut, par exemple, correspondre à un véhicule de chantier conventionnel, le premier circuit de freinage peut présenter au moins quatre actionneurs de freinage susceptibles d'agir sur au moins deux premiers essieux et le second circuit de freinage peut présenter au moins quatre actionneurs susceptibles d'agir sur au moins deux seconds essieux.

### Brève description des figures

Pour sa bonne compréhension, l'invention est décrite en référence au dessin ci annexé représentant à titre d'exemple non limitatif plusieurs formes de réalisation du dispositif de freinage d'un véhicule industriel selon celle-ci.
Figure 1 est un schéma représentant un dispositif de freinage selon l'art antérieur,
Figures 2 et 3 sont des schémas représentant une forme de réalisation d'un dispositif de freinage respectivement selon un mode de fonctionnement normal et mode de fonctionnement défaillant,
Figures 4 et 5 sont des schémas représentant une autre forme de réalisation d'un dispositif de freinage respectivement selon un mode de fonctionnement normal et mode de fonctionnement défaillant,
Figures 6 et 7 sont des schémas représentant une autre forme de réalisation d'un dispositif de freinage respectivement selon un mode de fonctionnement normal et mode de fonctionnement défaillant.

### Description détaillée de l'invention

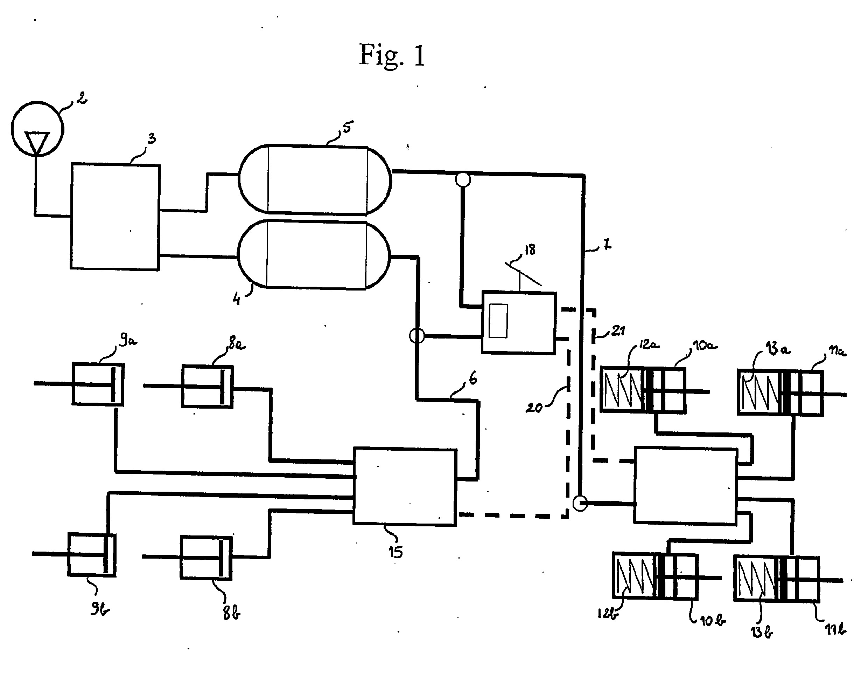

La figure 1 montre schématiquement l'architecture d'un dispositif de freinage pour un véhicule industriel selon l'art antérieur. Le véhicule qui est illustré présente quatre essieux qui se distribuent en deux essieux avant et deux essieux arrière ; la multiplicité d'essieux, notamment, à l'avant d'un véhicule présente une problématique particulière en cas de défaillance d'un circuit de freinage et plus particulièrement du circuit de freinage avant.

De façon générale, le freinage d'un véhicule industriel, par exemple un camion porteur d'une charge ou tracteur d'une charge, est assuré de manière pneumatique. A cet effet, comme on peut le voir sur la figure 1, il est prévu un compresseur d'air 2 qui alimente un distributeur d'air 3. Le distributeur d'air 3 a, comme fonction, de filtrer et réguler la pression de l'air provenant du compresseur d'air 2.

En aval du distributeur d'air 3, on peut trouver deux réservoirs 4, 5 qui alimentent respectivement (i) un premier circuit de freinage avant 6 pneumatique destiné à fournir l'énergie de freinage aux essieux avant et (ii) un circuit de freinage arrière 7 pneumatique destiné à fournir l'énergie de freinage aux essieux arrière.

Le circuit de freinage avant 6 est raccordé à quatre actionneurs de freinage 8a, 8b et 9a, 9b qui convertissent l'énergie pneumatique en une action mécanique sur un moyen de freinage d'une roue, c'est-à-dire un disque ou un tambour selon les cas. Les moyens de freinage ne sont pas représentés sur les figures, en raison de leurs caractéristiques largement connues.

De manière symétrique, le circuit de freinage arrière 7 est raccordé à quatre actionneurs de freinage 10a, 10b et 11a, 11b qui convertissent l'énergie pneumatique en une action mécanique sur un moyen de freinage d'une roue, c'est-à-dire un disque ou un tambour selon les cas. Les moyens de freinage ne sont pas représentés sur les figures, en raison de leurs caractéristiques largement connues. De façon usuelle, les actionneurs de frein arrière 10a, 10b et 11a, 11b qui intègrent la fonction de frein de parc peuvent posséder des ressorts 12a, 12b et 13a, 13b qui maintiennent serrés les moyens de freinage, la pression pneumatique venant desserrer lesdits moyens de freinage lors du roulage du véhicule.

La pression pneumatique appliquée sur les actionneurs avant 8a, 8b et 9a, 9b et arrière 10a, 10b et 11a, 11b est fixée par respectivement un module de commande avant qui peut être un module électronique de freinage EBS avant 15 et un module de commande arrière qui peut être un module électronique de freinage EBS arrière 16, qui fixent la valeur de consigne de la pression pneumatique à appliquer sur les actionneurs avant 8a, 8b et 9a, 9b et sur les actionneurs de freinage arrière 10a, 10b et 11a, 11b au cours d'un freinage. De façon schématique, le module électronique de freinage EBS fixe la valeur de consigne à appliquer à un actionneur de freinage en fonction de la demande de freinage du conducteur en intégrant un ou plusieurs paramètres dont la gestion peut être stockée dans une unité de contrôle électronique ECU qui n'est pas représentée sur le dessin ; ces paramètre peuvent être, de manière non limitative, l'adhérence ou la vitesse ou un délestage d'une roue, l'angle de braquage d'une roue directrice, un facteur de répartition entre un freinage à appliquer sur un véhicule tracteur et sur une remorque...

Le freinage est déclenché par un conducteur de véhicule qui appuie, généralement, avec son pied sur une pédale 18 d'un dispositif de commande 19. En mode de fonctionnement normal du véhicule, les modules électroniques de freinage EBS avant 15 et arrière 16 sont commandés par un signal électrique (éventuellement pondéré par un ou plusieurs des paramètres précités) qui est proportionnel à la course qui est appliquée sur la pédale 18. Des liaisons électriques filaires qui ne sont pas représentées sur le dessin peuvent assurer la liaison entre le dispositif de commande 19 et chacun des modules électroniques de freinage EBS avant 15 et arrière 16.

En cas de défaillance électrique, un système de commande pneumatique peut prendre le relais pour assurer la commande des modules électroniques EBS avant 15 et arrière 16. En fonction de la course appliquée sur la pédale 18, un signal pneumatique est transmis au travers d'un circuit pneumatique de pilotage avant 20 au module électronique de freinage EBS avant 15 pour fixer une valeur de consigne à appliquer aux quatre actionneurs de freinage avant 8a, 8b et 9a, 9b et un signal pneumatique est transmis au travers d'un circuit pneumatique de pilotage arrière 21 au module électronique de freinage EBS arrière 16 pour fixer une valeur de consigne à appliquer aux quatre actionneurs de freinage arrière 10a, 10b et 11a, 11b.

Les circuits de pilotage pneumatiques avant 20 et arrière 21, par convention, sont représentés en traits discontinus tandis que les circuits pneumatiques de puissance à savoir le circuit de freinage avant 6 et le circuit de freinage arrière 7 sont représentés, par convention, en traits continus.

On constate donc qu'une défaillance d'un des circuits de freinage avant 6 ou arrière 7 se traduit par une perte de freinage totale sur les essieux concernés. Dans le cas d'un véhicule multi essieux, compte tenu du nombre d'actionneurs de freinage, il convient de rétablir une énergie pneumatique significative pour permettre à ces actionneurs, au nombre d'au moins quatre, d'agir efficacement sur les moyens de freinage de type disque ou tambour.

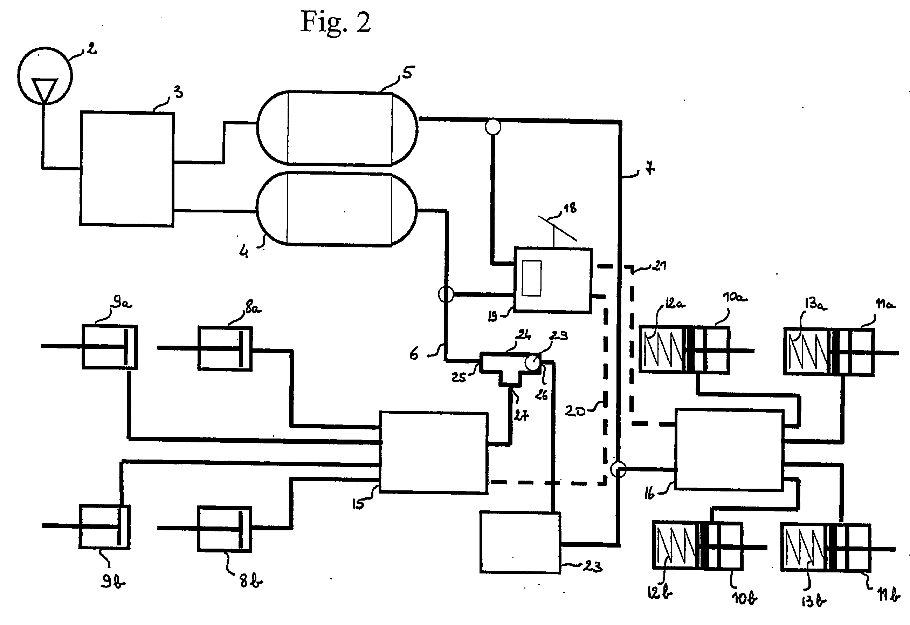

Dans une forme de réalisation de l'invention qui est schématiquement représentée à la figure 2, on note qu'un premier circuit de freinage (en l'occurrence le circuit de freinage avant 6) est pneumatiquement connecté au second circuit de freinage (en l'occurrence le circuit de freinage arrière 7).

La liaison entre les circuits de freinage avant 6 et arrière 7 peut se faire par deux organes standard à savoir une valve de barrage 23 placée en série avec une double valve d'arrêt 24.

En pratique, il est envisagé de réaliser un piquage sur le circuit de freinage arrière 7 et de relier l'entrée de la valve de barrage 23 au circuit de freinage arrière 7. Fonctionnellement, la valve de barrage 23 se comporte comme un clapet dont le fonctionnement est automatique ; la valve de barrage 23 est passante et, donc, autorise le passage vers l'aval si la pression qui s'applique en amont au niveau de son entrée ne peut se maintenir à un niveau prédéterminé suffisant. Concrètement, la valve de barrage 23 peut présenter un diaphragme souple qui est appliqué sur un siège ; le diaphragme est maintenu appliqué sur un siège sous l'action d'un ressort dont la tension peut être ajusté par une vis de réglage. La valve de barrage permet donc l'alimentation d'un circuit pneumatique lorsque la pression en amont de la valve a au moins atteint un pression dite pression de barrage correspondant à la pression nécessaire à s'opposer à l'action du ressort. Lorsque la pression de réglage d'ouverture est dépassée, elle soulève le diaphragme de son siège et contre l'effort exercé par le ressort. La valve de barrage est alors passante et l'air se dirige vers le circuit aval. Dès que cette condition cesse, le ressort repousse le diaphragme sur son siège, ce qui provoque la fermeture du diaphragme et interdit l'égalisation des pressions entre les circuits amont et aval.

La double valve d'arrêt 24 est un organe pneumatique qui présente une première entrée 25 et une seconde entrée 26 et une sortie 27 ainsi qu'un clapet 29 qui circule entre les première et seconde entrées 25 et 26 et obture l'entrée qui est à la pression la plus faible.

Comme le montre la figure 2, la double valve d'arrêt 24 assure la connexion entre le circuit de freinage avant 6 et le circuit de freinage arrière 7 puisque l'entrée 26 de la double valve d'arrêt 24 est connectée à la sortie de la valve de barrage 23 et l'entrée 25 de la double valve d'arrêt 24 est connectée au circuit de freinage avant 6. La sortie 27 de la double valve d'arrêt 24 rejoint le module électronique de freinage EBS avant 15.

De manière concrète, la valve de barrage 23 et la double valve d'arrêt 24 sont directement fixées sur le module électronique de freinage EBS avant 15. La valve de barrage 23 et la double valve d'arrêt 24 font partie d'un système de secours et il importe donc qu'aucun élément susceptible de lui-même connaître un dysfonctionnement ou une panne ne s'interpose entre la valve de barrage 23 ou la double valve d'arrêt 24 et le module électronique de freinage EBS avant 15.

Le circuit de freinage 1, lorsqu'il est dans un mode de fonctionnement normal illustré à la figure 2, fonctionne avec un circuit de freinage avant 6 et un circuit de freinage arrière 7 qui se comportent de manière indépendante. Une action sur le dispositif de commande 11 se traduit par un freinage par les quatre actionneurs avant 8a, 8b et 9a, 9b et un freinage par les quatre actionneurs arrière 10a, 10b et 11a, 11b.

Il est important de préciser que, au démarrage du véhicule, lors de la montée en pression pneumatique des circuits de freinage avant 6 et arrière 7 jusqu'à une pression nominale de fonctionnement, la valve de barrage 23 permet de piloter la position du clapet 29 de la double valve d'arrêt 24.

En conditions normales de fonctionnement du dispositif de freinage 1, pour assurer l'indépendance des circuits de freinage avant 6 et arrière 7 de façon à ce que chacun des circuits de freinage avant 6 et arrière 7 fonctionne de manière indépendante, il importe que le clapet 29 de la double valve d'arrêt 24 obture la seconde entrée 26 de cette dernière qui est reliée au circuit de freinage arrière 7.

Dans l'exemple de réalisation illustrée, cette fonction est dévolue à la valve de barrage 23 ; la montée en pression se fait simultanément dans le circuit de freinage avant 6 et dans le circuit de freinage arrière 7 ; mais au niveau de la double valve d'arrêt 24, on observe un décalage dans l'application de la pression pneumatique nominale à la première entrée 25 de la double valve d'arrêt 24 connectée au circuit de freinage avant 6 par rapport à l'application de la pression pneumatique à la seconde entrée 26 de la double valve d'arrêt 24 connectée au circuit de freinage arrière 7. Ce décalage qui est important pour un bon fonctionnement du dispositif de freinage 1 est réalisé, dans l'exemple illustré, par la valve de barrage 23 qui ne devient passante que lorsqu'il lui est appliqué au niveau de son entrée une pression pneumatique excédant une valeur prédéterminée. L'action de la valve de barrage 23 fait que, lors de la montée en pression pneumatique des circuits de freinage avant 6 et arrière 7, le clapet 29 de la double valve d'arrêt 24 est immédiatement soumis à une pression pneumatique venant de la seconde entrée 25 de la double valve d'arrêt 24 connectée au circuit avant 6 et, donc, vient se placer dans la position dans laquelle le clapet 29 obture la seconde entrée 26 de la double valve d'arrêt 24 qui est reliée au circuit arrière 7. Dans ce mode de fonctionnement qui correspond au mode de fonctionnement normal du dispositif de freinage 1, le circuit de freinage avant 6 et le circuit de freinage arrière 7 sont en permanence connectés mais la valve de barrage 23 définit un ordre de priorité dans l'application des pressions pneumatiques qui s'exercent sur chacune des entrées 25 et 26 de la double valve d'arrêt 24 de façon à piloter la position du clapet 29 de cette dernière.

On peut préciser que la valve de barrage 23 a comme fonction supplémentaire d'isoler le circuit de freinage avant 6 du circuit de freinage arrière 7 en cas de chute partielle ou totale de pression pneumatique dans le circuit de freinage arrière 7. En l'occurrence, la valve de barrage 23 ne peut être passante puisque, par construction, elle interdit le passage vers le circuit de freinage avant 6 si la pression dans le circuit de freinage arrière 7 ne se maintient pas à une valeur suffisante prédéterminée.

Dans le cas d'une défaillance pneumatique du circuit de freinage avant 6 qui représente le cas de figure le plus critique à gérer, le dispositif de freinage 1 dans son mode de réalisation représenté permet de rétablir une puissance de freinage pneumatique significative sur les deux essieux avant.

Une défaillance pneumatique du circuit de freinage avant signifie qu'aucune pression pneumatique de puissance et de pilotage du circuit de freinage avant n'atteint le module électronique de freinage EBS avant 15.

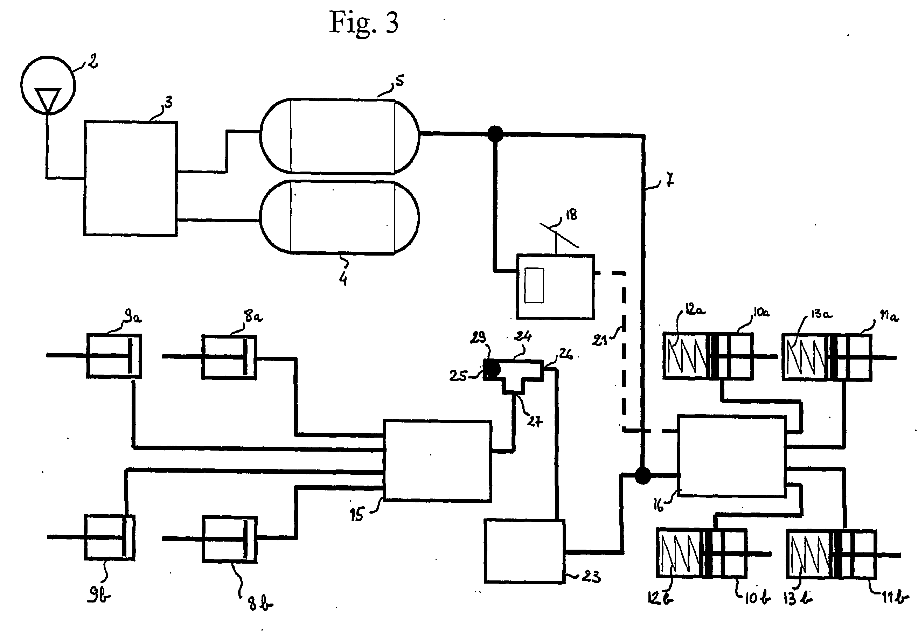

Cet état du dispositif de freinage 1 dans lequel le circuit de freinage avant 6 est inopérant est représenté à la figure 3 où, pour illustrer cet état, le circuit de freinage avant 6 et le circuit de pilotage pneumatique avant sont partiellement effacés.

La conséquence d'une chute partielle ou totale de pression en dessous de la pression nominale de freinage dans le circuit de freinage avant 6 produit un déplacement du clapet 29 de la double valve d'arrêt 24 vers l'entrée 26 de la double valve d'arrêt 24 qui est connectée au circuit de freinage avant 6. Le module de freinage EBS avant 15 est alors alimenté pneumatiquement par le circuit de freinage arrière 7 ; une capacité de freinage significative est alors rétablie sur les quatre actionneurs de freinage avant 8a, 8b et 9a, 9b. A titre d'exemple, si la pression pneumatique nominale du circuit de freinage arrière est de l'ordre de 12 à 14 bars, le pression pneumatique de secours qui pourra être reportée sur les quatre actionneurs avant 8a, 8b et 9a, 9b est de l'ordre de 6 à 7 bars ce qui permet d'assurer un décélération significative.

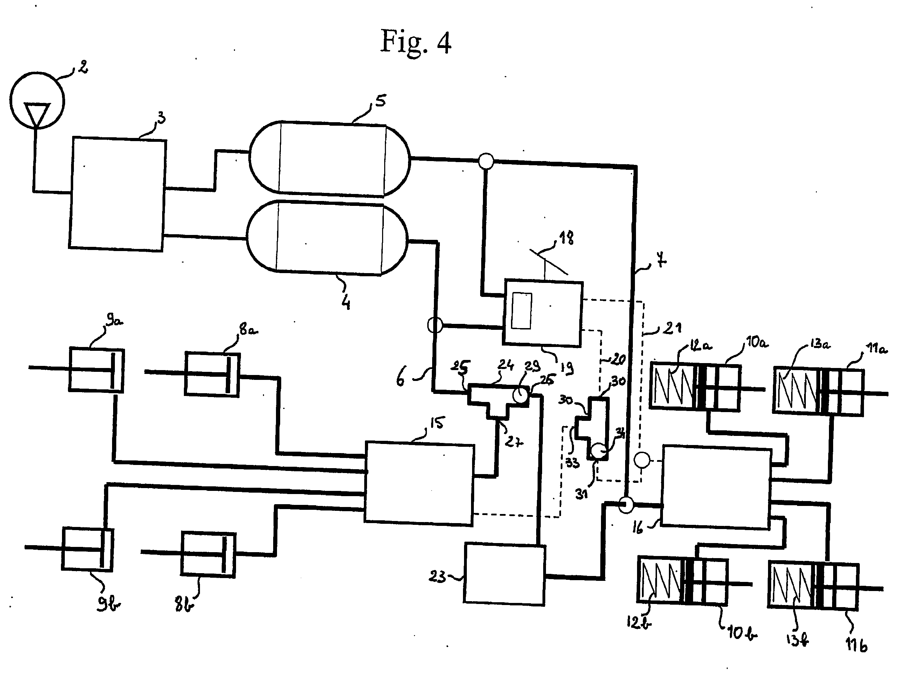

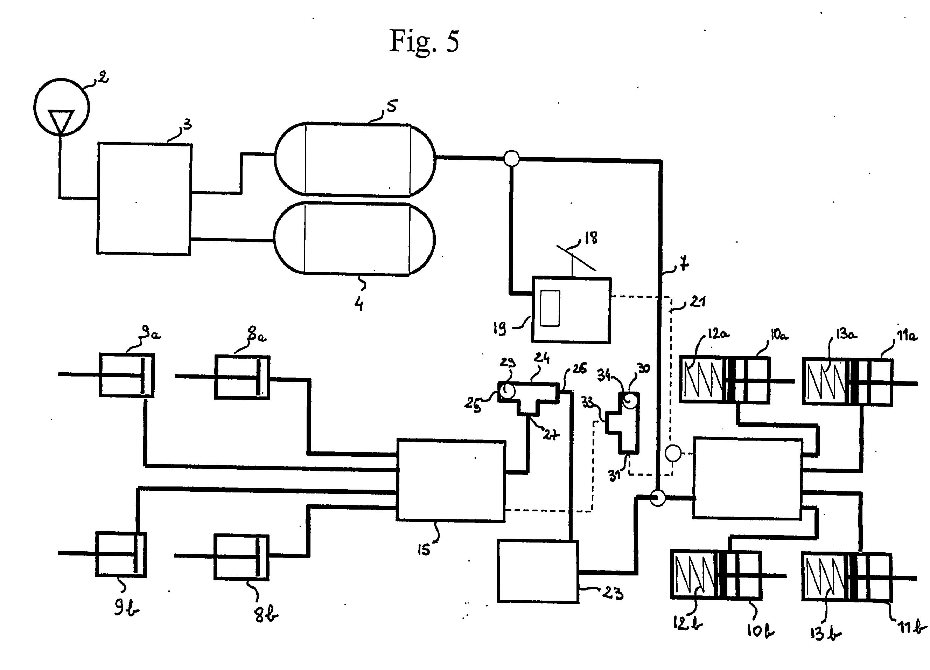

Les figures 4 et 5 illustrent une autre forme de réalisation de l'invention qui offre un degré supplémentaire dans la prise en compte d'avaries pneumatique et électrique. En effet, comme cela apparaît sur ces figures, il est prévu que le circuit de freinage avant 6 soit connecté au circuit de freinage arrière 7 selon des dispositions similaires à celles décrites aux figures 2 et 3 mais il est également prévu que le circuit de pilotage pneumatique avant 20 soit connecté avec le circuit de pilotage pneumatique arrière 21. Dans la forme de réalisation montrée aux figures 4 et 5, il est envisagé de transposer aux circuits de pilotage pneumatiques avant et arrière, le principe de connexion des circuits de freinage avant et arrière

La connexion des circuits de pilotage pneumatiques avant 20 et arrière 21 peut être attribuée à une double valve d'arrêt 30. Cette double valve d'arrêt 30 présente une première entrée 31 qui est reliée au circuit de pilotage pneumatique avant 20, une seconde entrée 32 qui est reliée au circuit de pilotage pneumatique arrière 21, et une sortie 33 qui est reliée à un module de commande avant qui peut être un module électronique de freinage EBS avant 15 ; la double valve d'arrêt 30 intègre un clapet 34 qui circule entre les première et seconde entrées 31 et 32 selon la pression qui s'applique à chacune de deux entrées sachant que le clapet 30 laisse passer l'air sous pression en provenance de celle des première et seconde entrées 31 et 32 qui est à la pression la plus élevée. Il peut être prévu de disposer une valve de barrage en série avec la double valve d'arrêt 30.

En fonctionnement normal du dispositif freinage qui apparaît à la figure 4, le circuit de freinage avant 6 agit de manière indépendante du circuit de freinage arrière 7 comme cela est explicité plus haut et le circuit de pilotage pneumatique avant 20 agit de manière indépendante du circuit de pilotage pneumatique arrière 21. En effet, en fonctionnement normal du dispositif de freinage, le clapet 34 de la double valve d'arrêt 30 est en appui contre la seconde entrée 32 ; le clapet 32 vient se mettre dans cette position lors de la montée en pression pneumatique des circuits de pilotage pneumatiques avant et arrière 20 et 21. La priorité est donnée au circuit de pilotage pneumatique avant 20 sur le circuit de pilotage pneumatique arrière 22 pour ce qui est de l'ordre de l'application des pressions pneumatiques sur le clapet 34 de la double valve d'arrêt 30 en provenance de la première entrée 30 et de la seconde entrée 32. Une valve de barrage peut permettre de réaliser un décalage dans l'application de la pression pneumatique sur respectivement la première entrée 31 et la seconde entrée 32 dans la double valve d'arrêt 30 ; il pourrait également être envisagé que le pression nominale du circuit de pilotage pneumatique avant 20 soit légèrement supérieure à la pression nominale du circuit de pilotage pneumatique arrière 21, pour respecter l'ordre de priorité sur la double valve d'arrêt 30.

Il peut être rappelé que les circuits de pilotage pneumatiques avant et arrière 20 et 21 commandent de manière pneumatique les modules électroniques de freinages avant et arrière 15 et 16 en redondance avec des circuits électriques de commande des modules électroniques de freinage EBS. Les circuits de pilotage pneumatiques avant et arrière 20 et 21 ont pour fonction de suppléer une panne électrique qui rendrait inopérants les circuits électriques de commande.

La figure 5 montre le comportement du dispositif de freinage en cas d'avarie électrique et en cas d'avarie sur l'alimentation pneumatique de la portion avant du véhicule qui se traduit par le fait que le circuit de freinage avant 6 et le circuit de pilotage pneumatique avant 20 sont inopérants ; pour illustrer cette avarie, le circuit de freinage avant 6 et le circuit de pilotage pneumatique avant 20 n'apparaissent pas la figure 5.

En ce qui concerne l'alimentation de secours en air comprimé de puissance, le module électronique de freinage EBS avant 15 est alimenté par le circuit de freinage arrière 7 selon le principe qui est explicité plus haut en relation avec la figure 3.

En ce qui concerne l'alimentation de secours en air comprimé de pilotage, le module électronique de freinage EBS avant 15 est alimenté par le circuit de pilotage arrière 21. En cas de chute de pression partielle ou totale dans le circuit de pilotage pneumatique avant 20, la première entrée 31 se trouve à une pression inférieure à celle qui s'applique sur la seconde entrée 32 de la double valve d'arrêt 30 ; de ce fait le clapet 34 vient se positionner contre la première entrée 31. La double valve d'arrêt 30 dirige alors le flux d'air comprimé vers l'orifice de pilotage de module électronique de freinage EBS avant 15.

Il apparaît, donc, que l'invention permet de rétablir l'ensemble des fonctions pneumatiques de puissance et de pilotage sur le ou les actionneurs de freinage avant.

Il peut être ajouté que l'invention peut trouver une application sur un véhicule équipé d'un système de freinage conventionnel c'est-à-dire dépourvu de modules électroniques de freinage EBS.

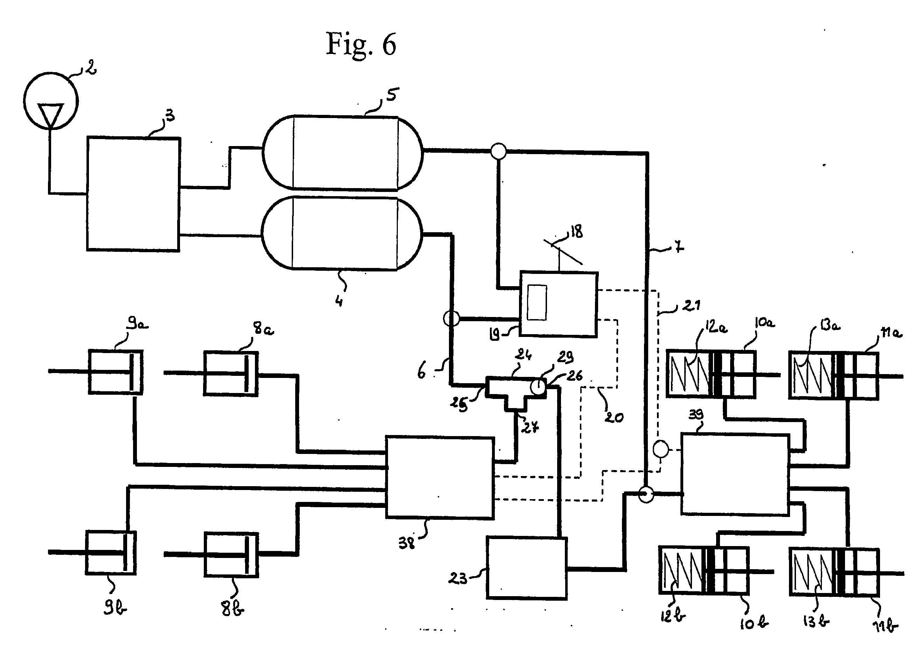

Comme peut le montrer la figure 6, dans une configuration traditionnelle, il peut être prévu un circuit de freinage avant 6 qui alimente en air comprimé de puissance plusieurs actionneurs de freinage avant 8a,8b,9a,9b ; le circuit de freinage avant 6 intègre un module de commande avant qui peut être, par exemple, une valve relais 38 qui contrôle la pression à appliquer aux actionneurs de freinage avant 8a,8b,9a,9b en fonction d'une pression de pilotage débitée par le dispositif du commande 19 qui dans le cas présent peut être un robinet pneumatique. Un circuit de pilotage pneumatique avant 20 relie le dispositif de commande 19 à un orifice de pilotage de la valve relais 38.

Pour la partie arrière du véhicule, il est prévu un circuit de freinage arrière 7 qui alimente en air comprimé de puissance plusieurs actionneurs de freinage arrière 10a, 10b, 11a, 11b ; le circuit de freinage arrière 7 intègre un module de commande arrière qui peut être, par exemple, un correcteur de freinage 39 ou un répartiteur qui contrôle et, éventuellement, corrige en fonction de certains paramètres la pression qui doit être appliquée aux actionneurs de freinage arrière 10a, 10b, 11a, 11b. Un circuit de pilotage pneumatique arrière 21 relie le dispositif de commande 19 à un orifice de pilotage du correcteur 39 ; par mesure de sécurité, le circuit de pilotage pneumatique est de plus relié à un orifice de pilotage de la valve relais 38.

Le dispositif de freinage montré à la figure 6 se distingue de ceux montrés aux figures 2 et 4 en ce que les modules de commande avant et arrière sont, dans le cas du dispositif de la figure 6, à commande exclusivement pneumatique tandis que, dans le cas des dispositifs des figures 2 et 4, les modules de commande sont à pilotage électronique et de manière redondante à pilotage pneumatique.

En fonctionnement normal, le dispositif de freinage montré à la figure 6 se comporte comme si le circuit de freinage avant 6 est indépendant de circuit de freinage arrière 7. Le circuit de freinage avant 6 est connecté au circuit de freinage arrière 7 par une double valve d'arrêt 24 en série de laquelle peut être disposée une valve de barrage 23 de manière similaire à la mise en oeuvre de l'invention illustrée par les figures 2 et 4. Ainsi, il se produit un décalage dans la mise en pression des première et seconde entrées 25 et 26 de la double valve d'arrêt 24 avec une priorité accordée la mise en pression sur la première entrée 25 dans telle sorte que le clapet 29 vient obturer la seconde entrée de la double valve d'arrêt 24.

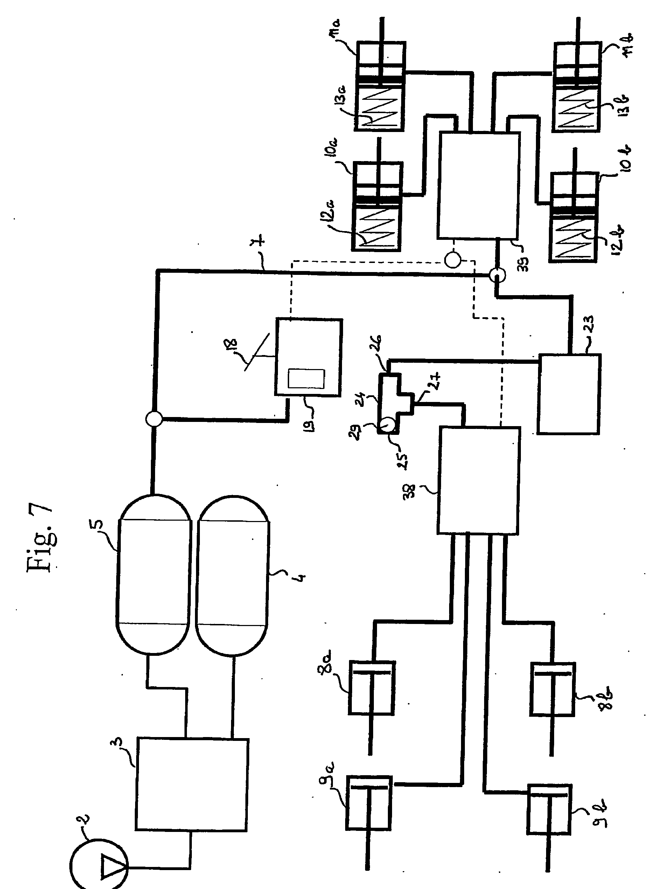

En cas d'avarie sur l'alimentation pneumatique de puissance et de pilotage de la partie avant du véhicule ce qui est illustrée sur la figure 7 par l'absence du circuit de freinage avant 6 et du circuit de pilotage pneumatique avant 20, la double valve d'arrêt 24 met en communication le circuit de freinage arrière 7 avec le circuit de freinage avant 6. Le clapet 29 vient en appui contre la première entrée 26 de la double valve d'arrêt 24 ce qui permet, dans un mode de fonctionnement de secours, d'alimenter en air comprimé de puissance les actionneurs de freinage avant 8a, 8b, 9a, 9b. Le pilotage de la valve de relais 38 est réalisé par le circuit de pilotage pneumatique arrière 21 qui est connecté à un orifice de pilotage de la valve relais 38.

L'invention permet notamment d'offrir un dispositif de freinage qui est particulièrement bien adapté à la gestion d'un dysfonctionnement d'un circuit de freinage d'un véhicule multi essieux avant et arrière.

Bien entendu, l'invention n'est pas limitée à la forme de réalisation décrite ci-dessus, mais elle en embrasse au contraire toutes les variantes de réalisation. L'invention pourrait notamment être mise en oeuvre dans le cadre d'un dispositif de freinage hydraulique.

Il est précisé que l'invention peut être mise en oeuvre par un système qui prend en compte la gestion d'une défaillance du circuit de freinage arrière ; pour cela, il conviendrait d'inverser l'orientation de la valve de barrage 23 et de la double valve d'arrêt 24 par rapport à la manière avec laquelle elles sont orientées dans l'exemple de réalisation montrée aux figures 2 et 3.

L'invention pourrait également être mise en oeuvre dans le cadre d'un système symétrique c'est-à-dire un système qui soit susceptible de prendre en compte une défaillance sur le circuit de freinage avant ou sur le circuit de freinage arrière. Pour cela, les dispositions (double valve d'arrêt 24 et valve de barrage 23) que l'on trouve sur l'exemple de réalisation de la figure 2 et qui concernent le circuit de freinage avant pourraient se trouver de manière symétrique sur le circuit de freinage arrière.

Il peut également être envisagé de transposer les dispositions de la présente invention à un véhicule dont les deux circuits de freinage ne sont pas séparés en un circuit avant et un circuit arrière mais à un véhicule ayant deux circuits de freinage disposés en X soit un premier circuit de freinage agissant sur un ou plusieurs actionneurs de freinage situés au niveau avant droit et sur un ou plusieurs actionneurs de freinage arrière gauche et un second circuit de freinage agissant sur un ou plusieurs actionneurs de freinage situés au niveau avant gauche et sur un ou plusieurs actionneurs de freinage arrière droit.

Il peut également être envisagé que la connexion du circuit de freinage avant 6 et du circuit de freinage arrière 7 soit réalisée par un distributeur pneumatique 3/2 à tiroir utilisé en sélecteur de circuit. Dans cette possible mise en oeuvre de l'invention, le circuit de freinage avant 6 et le circuit de freinage arrière 7 sont respectivement branchés sur une première entrée et une seconde entrée du distributeur tandis que la sortie du distributeur est branchée sur un module de commande avant de type électronique et/ou pneumatique. En mode de fonctionnement normal du dispositif de freinage, le tiroir du distributeur est positionné de façon à obturer l'entrée reliée au circuit de freinage arrière ; le distributeur est donc passant depuis le circuit de freinage avant vers le module de commande avant.

En mode de fonctionnement de secours, le tiroir du distributeur bascule pour obturer l'entrée connectée au circuit de freinage avant de telle sorte que le module de commande avant est alimenté par le circuit de freinage arrière. Le pilotage du distributeur 3/2 peut être de préférence pneumatique ; il peut ainsi être prévu que le distributeur soit piloté par l'air comprimé du circuit de freinage avant qui maintient le tiroir dans sa position dans laquelle il obture l'entrée reliée au circuit de freinage arrière. En cas de chute partielle ou totale du circuit de freinage avant, le tiroir bascule ce qui met en relation l'entrée du tiroir reliée au circuit de freinage arrière avec la sortie du distributeur.

## Revendications

1. Dispositif de freinage (1) notamment pour un véhicule industriel, comprenant un premier circuit de puissance pneumatique de freinage (6) susceptible d'agir sur un ou plusieurs premiers actionneurs de freinage (8a, 8b, 9a, 9b) du véhicule et fonctionnant sous une pression pneumatique nominale de fonctionnement et un second circuit pneumatique de puissance de freinage (7) susceptible d'agir sur un ou plusieurs seconds actionneurs de freinage (10a, 10b, 11a, 11b) du véhicule et fonctionnant sous une pression nominale de fonctionnement, **caractérisé en ce que**
le dispositif de freinage comprend des moyens de connexion (24) du second circuit de puissance pneumatique de freinage (7) avec le premier circuit de puissance pneumatique de freinage (6) interdisant le passage pneumatique du second circuit de puissance de freinage (7) vers le premier circuit de puissance de freinage (6) lorsque le premier circuit de puissance de freinage (6) fonctionne à sa pression nominale de fonctionnement et autorisant le passage pneumatique du second circuit de puissance de freinage (7) vers le premier circuit de puissance de freinage (6) lorsque le premier circuit de puissance de freinage (6) fonctionne à une pression inférieure à sa pression nominale de fonctionnement,
lesdits moyens de connexion (24) étant réalisés par un distributeur à trois orifices et deux positions présentant une première entrée (25) reliée au premier circuit de puissance de freinage (6), une seconde entrée (26) reliée au second circuit de puissance de freinage (7), une sortie (27) reliée à un premier module de commande (15) du premier circuit de puissance de freinage (6) et un tiroir qui en position de repos obture la seconde entrée (26).

2. Dispositif de freinage selon la revendication 1, **caractérisé en ce que** le distributeur est à commande pneumatique qui, lorsque la pression à la première entrée (25) est supérieure à une pression de seuil, met en communication ladite première entrée (25) avec la sortie (27), et qui, lorsque la pression à la première entrée (25) est inférieure à une pression de seuil, met en communication la seconde entrée (26) avec la sortie (27).

3. Dispositif de freinage selon la revendication 1 ou 2, **caractérisé en ce qu'il** comprend une valve de barrage (23) placée en amont dudit distributeur et présentant une entrée reliée au second circuit de freinage (7) et une sortie reliée à la deuxième entrée (26) dudit distributeur, la valve de barrage (23) étant passante entre son entrée et sa sortie lorsque la pression pneumatique dans le second circuit de puissance de freinage (7) dépasse une pression prédéterminée égale à la pression de barrage.

4. Dispositif de freinage selon l'une des revendications 1 à 3, **caractérisé en ce que** le premier circuit de puissance de freinage est un circuit de puissance de freinage avant (6) d'un véhicule et le second circuit de puissance de freinage est un circuit de puissance de freinage arrière (7) dudit véhicule.

5. Dispositif de freinage selon la revendication 3, **caractérisé en ce que** ledit distributeur et ladite valve de barrage (23) sont directement fixés sur le premier module de commande (15).

6. Dispositif de freinage selon l'une des revendications 1 à 5, **caractérisé en ce que** le premier module de commande (15) est un module de commande électronisé.

7. Dispositif de freinage selon la revendication 6, **caractérisé en ce que** le premier module de commande (15) est piloté électriquement.

8. Dispositif de freinage selon la revendication 6 ou 7, **caractérisé en ce que** le premier module de commande (15) comporte un pilotage redondant par voie pneumatique.

9. Dispositif de freinage selon l'une quelconque des revendications précédentes, **caractérisé en ce qu'il** comprend un premier circuit de pilotage pneumatique (20) susceptible d'agir sur le premier module de commande et un second circuit de pilotage pneumatique (21) susceptible d'agir sur un second module de commande du second circuit de freinage, le dispositif de freinage comprenant des moyens de connexion du second circuit pneumatique de pilotage avec le premier circuit pneumatique de pilotage interdisant le passage pneumatique du second circuit de pilotage vers le premier circuit de pilotage lorsque le premier de pilotage circuit fonctionne correctement et autorisant le passage pneumatique du second circuit vers le premier circuit de pilotage lorsque le premier circuit de pilotage est défectueux.

10. Dispositif de freinage selon la revendication 9, **caractérisé en ce qu'il** comprend une vanne d'aiguillage reliant le second circuit de pilotage pneumatique (21) au premier circuit de pilotage pneumatique (20), ladite vanne présentant une seconde entrée reliée au second circuit de pilotage, une première entrée reliée au premier circuit de pilotage, et une sortie reliée au premier module de commande (15).

11. Dispositif de freinage selon la revendication 10, **caractérisé en ce que** la vanne d'aiguillage est une double valve d'arrêt (30) ayant une première entrée (31) relié au premier circuit de pilotage pneumatique (20), une seconde entrée (32) reliée au second circuit de pilotage pneumatique (21), une sortie (33) reliée audit premier module de commande et un clapet (34) qui circule entre la première entrée (31) et le seconde entrée (32) de sorte à diriger l'air depuis l'une des entrées (31) et (32) soumise à la pression la plus élevée vers la sortie (33).

12. Dispositif de freinage selon la revendication 10, **caractérisé en ce que** la vanne d'aiguillage est un distributeur 3/2.

13. Dispositif de freinage selon l'une des revendications 1 à 12, **caractérisé en ce que** le premier circuit de freinage de puissance (6) présente au moins quatre actionneurs (8a, 8b, 9a, 9b) de freinage susceptibles d'agir sur au moins deux premiers essieux et le second circuit de freinage de puissance (7) présente au moins quatre actionneurs (10a, 10b, 11a, 11b) susceptibles d'agir sur au moins deux seconds essieux.
